# EUROPEAN PATENT SPECIFICATION

(11) **EP 2 301 815 B1**
(45) Date of publication and mention of the grant of the patent: **20.06.2012**
(21) Application number: 10251626.7
(22) Date of filing: 21.09.2010
(51) Int. Cl.: B60T 7/04, B62L 3/04, B62H 1/02, B60T 17/18, B62K 23/06

(54) **Parking brake device for motorcycle**
Feststellbremsvorrichtung für ein Motorrad
Dispositif de frein à main pour motocyclette

(30) Priority: 22.09.2009 TW 098131915
(43) Date of publication of application: 30.03.2011
(73) Proprietor: Kwang Yang Motor Co., Ltd., Kaohsiung City (TW)
(72) Inventor: Lan, Shau-Pin, Kaohsiung City 813 (TW)
(74) Representative: Powell, Timothy John

(56) References cited:
- JP-A- 2 220 991
- JP-A- 2010 076 658
- JP-U- 50 003 247
- JP-U- 59 165 282

## Description

The present invention relates to a parking brake device, more particularly to a parking brake device for a motorcycle.

Generally, a heavy motorcycle is provided with a kickstand for parking, but not a main stand. However, when the motorcycle is parked on a slope only with the kickstand, the motorcycle may roll down the slope.

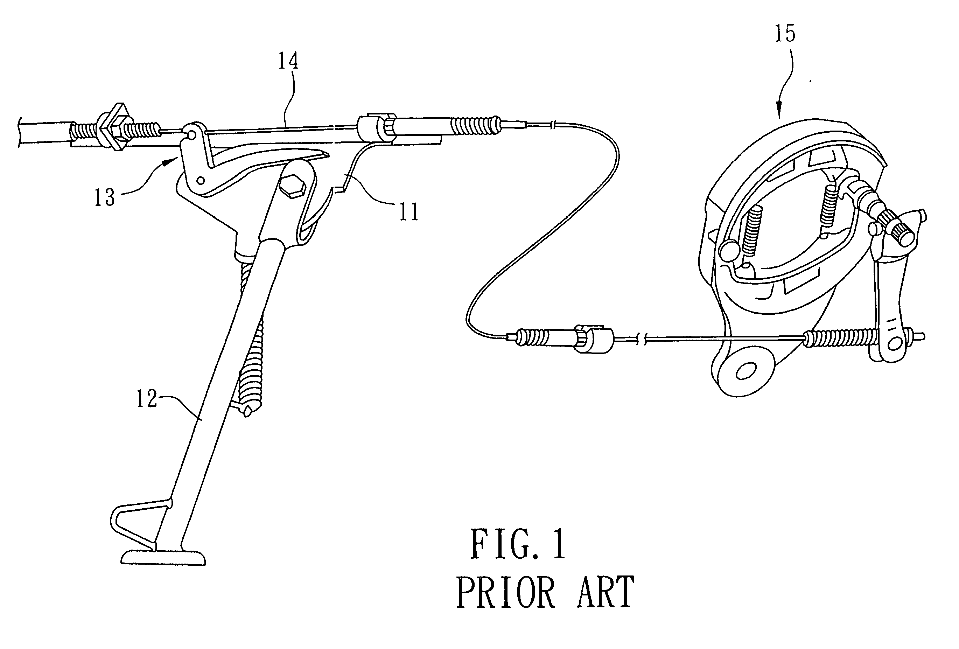

In an effort to overcome the above-mentioned disadvantage, Japanese Patent Publication No. 1990-237884 discloses a two-wheeled vehicle equipped with a conventional parking brake device as shown in Figure 1. The two-wheeled vehicle includes a motorcycle frame 11, a pivotable kickstand 12 pivoted on the motorcycle frame 11, an L-shaped swing lever 13 pivoted on the motorcycle frame 11 and driven by the kickstand 12, a transmission cable 14 connected to and moved by the swing lever 13, and a drum brake 15 controlled by the transmission cable 14.

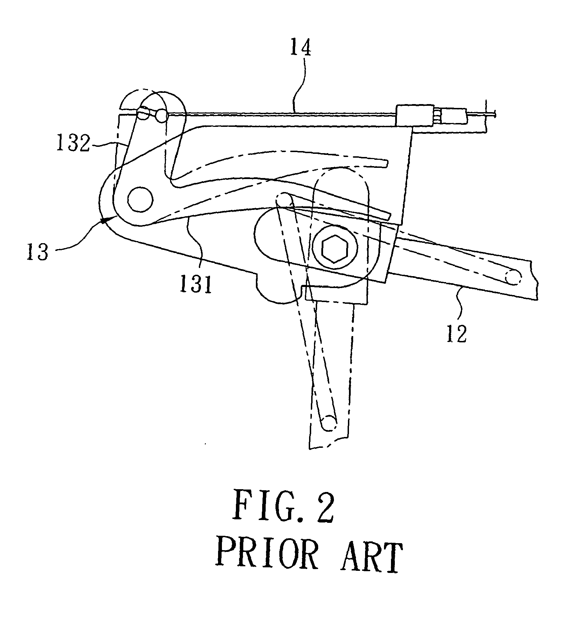

Referring to Figures 1 and 2, when parking of the two-wheeled vehicle is desired, the kickstand 12 is pivoted from a rest position (shown by solid lines in Figure 2) to a parking position (shown by dashed lines in Figure 2). Hence, the kickstand 12 pushes a first arm 131 of the swing lever 13 to pivot upwardly, such that a second arm 132 of the swing lever 13 pivots along with the first arm 131 so as to pull the transmission cable 14. Then, the drum brake 15 is driven by the transmission cable 14 to brake the two-wheeled vehicle. A significant force must be exerted on the transmission cable 14 for driving the drum brake 15. According to the lever principle, the swing lever 13 can provide such a significant force on the transmission cable 14 when a small force is exerted on the first arm 131 of the swing lever 13. However, in order to do so, the first arm 131 must be long so that it occupies a great space. Moreover, the configuration disclosed in this patent may not be used for a disc brake.

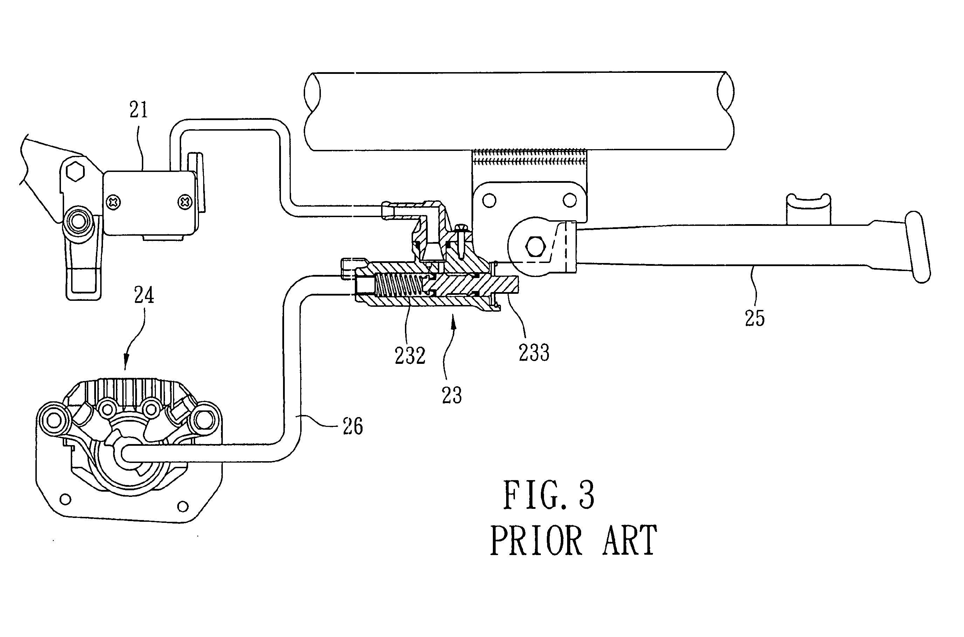

Taiwanese Patent No. 200842067 discloses another conventional parking brake device for a motorcycle as shown in Figure 3. Such a conventional parking brake device includes a hydraulic pump 21, a control valve 23, a brake caliper unit 24, and a kickstand 25. The kickstand 25 is configured to push a piston rod 233 of the control valve 23 to move into a brake fluid cylinder 232 of the control valve 23 when the kickstand 25 pivots downwardly to a parking position. Then, brake fluid in the brake fluid cylinder 232 is pressurized by the piston rod 233 so as to flow to the brake caliper unit 24 through a pipe 26 to operate the brake caliper unit 24 for stopping a brake disc (not shown). However, assembly of the control valve 23 and the pipe 26 is time-consuming and these elements increase overall manufacturing costs.

Therefore, an object of the present invention is to provide a parking brake device for a motorcycle that includes relatively simple components and that is low in cost.

Accordingly, a parking brake device for a motorcycle of the present invention includes an operation unit, a stand unit, and a disc brake unit driven by the operation unit.

The operation unit includes a hydraulic pump containing brake fluid, a piston rod extending into the hydraulic pump and being movable between a free position and a brake position where the piston rod is configured to pressurize the brake fluid in said hydraulic pump, and a control stick operable to drive movement of the piston rod from the free position to the brake position. The stand unit includes a pivotable kickstand having a stand body operable for pivoting between a rest position and a parking position.

The parking brake device is characterized by the stand unit further including a transmission cable having opposite first and second ends respectively fastened to the piston rod and the kickstand. The piston rod moves from the free position to the brake position when the kickstand pivots from the rest position to the parking position, and moves from the brake position to the free position when the kickstand pivots from the parking position to the rest position.

Other features and advantages of the present invention will become apparent in the following detailed description of the preferred embodiments with reference to the accompanying drawings, of which:
Figure 1 is a perspective view of a conventional parking brake device for a two-wheeled vehicle;
Figure 2 is a fragmentary side view of the conventional parking brake device for illustrating operation thereof;
Figure 3 is a schematic view of another conventional parking brake device for a motorcycle;
Figure 4 is a schematic view of a first preferred embodiment of a parking brake device for a motorcycle according to the present invention, a portion of a protection sleeve being removed for illustrating a transmission cable;
Figure 5 is a side view of a kickstand of the parking brake device of this invention;
Figure 6 is a schematic view of the parking brake device of the first preferred embodiment for illustrating the kickstand in a parking position; and
Figure 7 is a schematic view of a second preferred embodiment of a parking brake device for a motorcycle according to the present invention.

Before the present invention is described in greater detail, it should be noted that like elements are denoted by the same reference numerals throughout the disclosure.

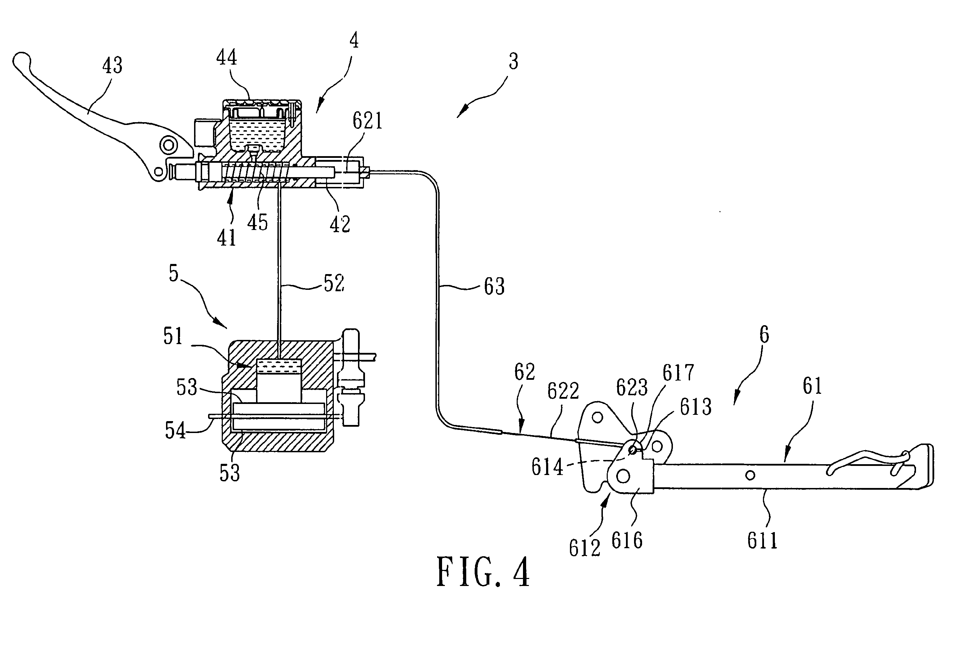

Referring to Figure 4, a first preferred embodiment of a parking brake device 3 for a motorcycle according to the present invention includes an operation unit 4, a disc brake unit 5, and a stand unit 6.

The operation unit 4 includes a hydraulic pump 41 containing brake fluid, a piston rod 42 extending into the hydraulic pump 41, a control stick 43 abutting against one end of the piston rod 42, and a brake fluid tank 44 in flow communication with the hydraulic pump 41. The piston rod 42 is movable between a free position and a brake position. In the brake position, the piston rod 42 is configured to pressurize the brake fluid in the hydraulic pump 41. The control stick 43 is operable to drive movement of the piston rod 42 from the free position to the brake position. The brake fluid tank 44 is configured to accommodate the brake fluid and to provide the hydraulic pump 41 with the brake fluid. In this embodiment, the control stick 43 is a lever configured to be controlled with a hand.

The disc brake unit 5 includes a hydraulic cylinder 51 in flow communication with the hydraulic pump 41 through a fluid pipe 52, a pair of brake calipers 53 configured to be driven by the hydraulic cylinder 51, and a brake disk 54 fixedly provided on a wheel of the motorcycle and disposed between the brake calipers 53.

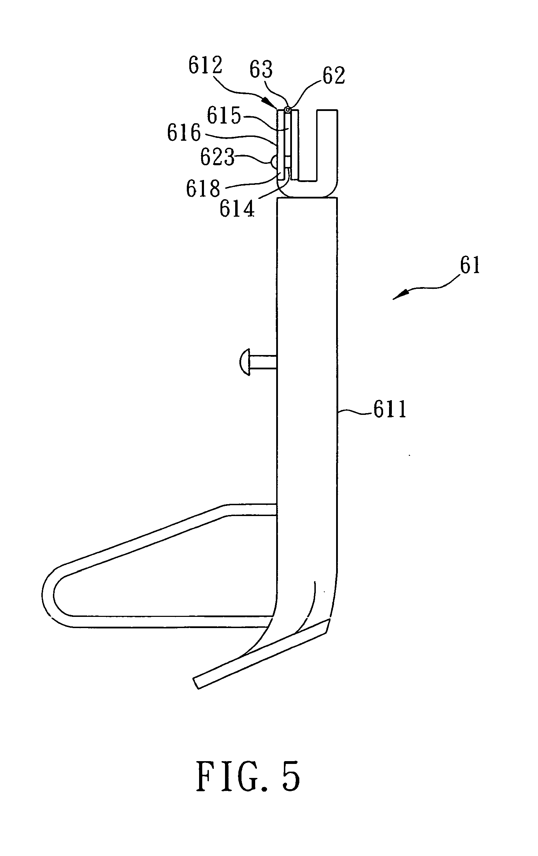

Referring to Figures 4 and 5, the stand unit 6 includes a pivotable kickstand 61, a transmission cable 62, and a protection sleeve 63 that is immovable with respect to a motorcycle frame of the motorcycle. The transmission cable 62 has opposite first and second ends 621, 622 respectively fastened to the piston rod 42 and the kickstand 61, and is movably housed in the protection sleeve 63. The kickstand 61 is operable for pivoting between a rest position and a parking position, and has a stand body 611 and a pivot part 612 fixedly connected to the stand body 611. The pivot part 612 has an outer surface 616, and a through hole 614 formed through the outer surface 616 and permitting extension of the transmission cable 62 therethrough. The pivot part 612 further has an outer periphery 617 formed with a notch 613 in spatial communication with the through hole 614 to allow movement of the transmission cable 62 into the through hole 614 through the notch 613 during assembly of the transmission cable 62 to the kickstand 61. The pivot part 612 further has an outer peripheral surface 618 formed with a cable-guiding groove 615 adjacent to the notch 613 so as to allow a portion of the transmission cable 62 to extend in the cable-guiding groove 615. The second end 622 of the transmission cable 62 has a positioning part 623.

Due to immovability with respect to the motorcycle frame of the motorcycle, the protection sleeve 63 protects the transmission cable 62 housed therein, and prevents the transmission cable 62 from winding around other components of the motorcycle. Since the position and method for disposing the protection sleeve 63 are well known to those skilled in the art, further details thereof will be omitted herein for the sake of brevity.

In this embodiment, the positioning part 623 of the transmission cable 62 is a spherical element, and a diameter thereof is slightly greater than the caliber of the through hole 614 in the pivot part 612. During assembly, the transmission cable 62 is moved through the notch 613 into the through hole 614, and then the position part 623 is biased by a spring 45 sleeved on the piston rod 42 to abut against the outer surface 616 of the pivot part 612, such that the second end 622 of the transmission cable 62 is fastened to the kickstand 61. Further, the cable-guiding groove 615 allows a portion of the transmission cable 62 to extend in the cable-guiding groove 615. In other embodiments, the positioning part 623 may be a pillar or other configuration adopted to abut against the outer surface 616 of the pivot part 612, and is not limited to the disclosure of this embodiment.

When the control stick 43 is pulled rearwardly to push the piston rod 42, the piston rod 42 moves from the free position to the brake position so as to pressurize the brake fluid in the hydraulic pump 41. Hence, the brake fluid flows through the fluid pipe 52 into the hydraulic cylinder 51, so that the hydraulic cylinder 51 drives the brake calipers 53 to tightly clamp the brake disc 54 for braking the motorcycle. The piston rod 42 will move back to the free position and the hydraulic cylinder 51 is operated to drive the brake calipers 53 to release the brake disc 54 when the control stick 43 is released.

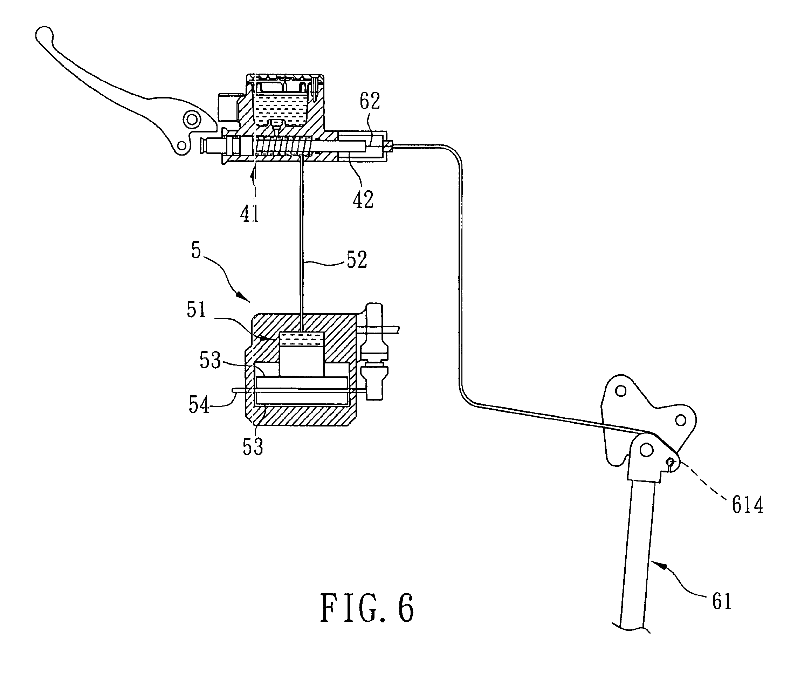

Referring to Figures 5 and 6, when the kickstand 61 is pivoted downwardly from the rest position to the parking position for parking the motorcycle, the pivot part 612 thereof pulls the transmission cable 62 to move the piston rod 42 from the free position to the brake position. At this time, the piston rod 42 pressurizes the brake fluid in the hydraulic pump 41, thereby resulting in flow of the brake fluid into the hydraulic cylinder 51, and then the hydraulic cylinder 51 is operated to drive the brake calipers 53 to tightly clamp the brake disc 54 for braking the motorcycle. The piston rod 92 moves back to the free position when the kickstand 61 pivots from the parking position to the rest position.

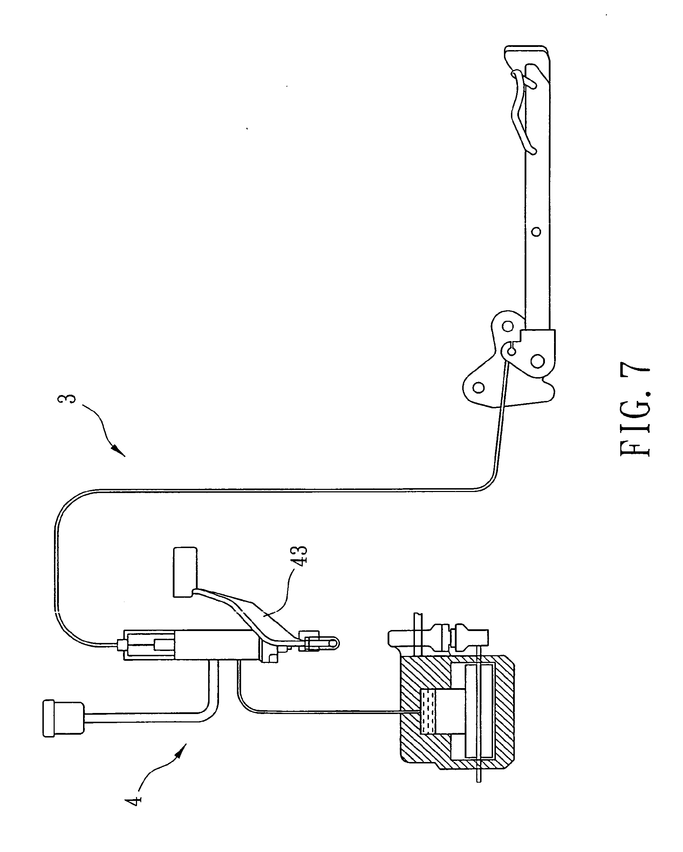

Referring to Figure 7, a second preferred embodiment of a parking brake device 3 for a motorcycle according to the present invention is shown to be similar to the first preferred embodiment. In this embodiment, the control stick 43 of the operation unit 4 is a pedal configured to be controlled with a foot.

In summary, by virtue of the notch 613 and the through hole 614 in the pivot part 612 of the kickstand 61, it is relatively easy to fasten the transmission cable 62 to the kickstand 61. Further, due to the presence of the transmission cable 62, the operation unit 4 is operable to drive the disc brake unit 5 for braking the motorcycle when the kickstand 61 is pivoted downwardly to the parking position. Therefore, there is no need for additional components as in the case of the conventional parking brake devices. Moreover, assembly of the parking brake device 3 of this invention is relatively simple, and manufacturing costs can be reduced.

## Claims

1. A parking brake device (3) for a motorcycle, said parking brake device (3) including:
an operation unit (4) including a hydraulic pump (41) containing brake fluid, a piston rod (42) extending into said hydraulic pump (41) and being movable between a free position and a brake position where said piston rod (42) is configured to pressurize the brake fluid in said hydraulic pump (41), and a control stick (43) operable to drive movement of said piston rod (42) from the free position to the brake position;
a stand unit (6) including a pivotable kickstand (61) having a stand body (611) operable for pivoting between a rest position and a parking position; and
a disc brake unit (5) driven by said operation unit (4);
**characterized by** said stand unit (6) further including a transmission cable (62) having opposite first and second ends (621, 622) respectively fastened to said piston rod (42) and said kickstand (61), such that said piston rod (42) moves from the free position to the brake position when said kickstand (61) pivots from the rest position to the parking position, and said piston rod (42) moves from the brake position to the free position when said kickstand (61) pivots from the parking position to the rest position.

2. The parking brake device (3) as claimed in Claim 1, **characterized in that** said kickstand (61) further has a pivot part (612) fixedly connected to said stand body (611), said pivot part (612) having an outer surface (616), and a through hole (614) formed through said outer surface (616) and permitting extension of said transmission cable (62) therethrough, said second end (622) of said transmission cable (62) having a positioning part (623) biased to abut against said outer surface (616) of said pivot part (612), such that said second end (622) of said transmission cable (62) is fastened to said kickstand (61), said pivot part (612) further having an outer periphery (617) formed with a notch (613) in spatial communication with said through hole (614) to allow movement of said transmission cable (62) into said through hole (614) through said notch (613) during assembly of said transmission cable (62) to said kickstand (61).

3. The parking brake device (3) as claimed in claim 2, **characterized in that** said pivot part (612) of said kickstand (61) further has an outer peripheral surface (618) formed with a cable-guiding groove (615) adjacent to said notch (613) so as to allow a portion of said transmission cable (62) to extend in said cable-guiding groove (615).

4. The parking brake device (3) as claimed in any one of Claims 1 to 3, **characterized in that** said stand unit (6) further includes a protection sleeve (63) that is immovable with respect to a motorcycle frame of the motorcycle, and said transmission cable (62) is movably housed in said protection sleeve (63).

5. The parking brake device (3) as claimed in any one of Claims 1 to 4, **characterized in that** said operation unit (4) further includes a brake fluid tank (44) in flow communication with said hydraulic pump (41), said brake fluid tank (44) being configured to accommodate the brake fluid and to provide said hydraulic pump (41) with the brake fluid.

6. The parking brake device (3) as claimed in any one of Claims 1 to 5, **characterized in that** said control stick (43) of said operation unit (4) is a lever configured to be controlled with a hand.

7. The parking brake device (3) as claimed in any one of Claims 1 to 5, **characterized in that** said control stick (43) of said operation unit (4) is a pedal configured to be controlled with a foot.

## Patentansprüche

1. Park-Bremsvorrichtung (3) für ein Motorrad, wobei diese Park-Bremsvorrichtung (3) Folgendes umfasst:
eine Betätigungseinheit (4), welche eine Hydraulik-Pumpe (41) umfasst, die Bremsflüssigkeit enthält, eine Kolbenstange (42), die sich in die Hydraulik-Pumpe (41) hinein erstreckt und zwischen einer freien Stellung und einer Bremsstellung bewegbar ist, wobei die Kolbenstange (42) so aufgebaut ist, dass sie die Bremsflüssigkeit in der Hydraulik-Pumpe (41) unter Druck setzt, und einen Steuerknüppel (43), der betätigbar ist, um eine Bewegung der Kolbenstange (42) aus der freien Stellung in die Bremsstellung anzutreiben;
eine Ständereinheit (6), die einen schwenkbaren Radständer (61) umfasst, der einen Ständerkörper (611) aufweist und für eine Verschwenkung zwischen einer Ruhestellung und einer Parkstellung betätigbar ist; und
eine Bremsscheibeneinheit (5), die von der Betätigungseinheit (4) angetrieben wird;
**dadurch gekennzeichnet, dass** die Ständereinheit (6) weiterhin ein Übertragungskabel (62) aufweist, das einander entgegen gesetzte erste und zweite Enden (621, 622) besitzt, die an der Kolbenstange (42) bzw. dem Radständer (61) befestigt sind, so dass sich die Kolbenstange (42) aus der freien Stellung in die Bremsstellung bewegt, wenn der Radständer (61) aus der Ruhestellung in die Parkstellung geschwenkt wird, und sich die Kolbenstange (42) aus der Bremsstellung in die freie Stellung bewegt, wenn der Radständer (61) aus der Parkstellung in die Ruhestellung geschwenkt wird.

2. Park-Bremsvorrichtung (3) nach Anspruch 1, **dadurch gekennzeichnet, dass** der Radständer (61) weiterhin einen Schwenkteil (612) besitzt, der fest mit dem Ständerkörper (611) verbunden ist, wobei der Schwenkteil (612) eine äußere Oberfläche (616) und ein durchgehendes Loch (614) aufweist, das durch die äußere Oberfläche (616) hindurch ausgebildet ist und es ermöglicht, dass sich das Übertragungskabel (62) durch es hindurch erstreckt, wobei das zweite Ende (622) des Übertragungskabels (62) einen Positionierteil (623) aufweist, der so vorgespannt ist, das er an der besagten äußeren Oberfläche (616) des Schwenkteils (612) anliegt, so dass das zweite Ende (622) des Übertragungskabels (62) an dem Radständer (61) befestigt ist, wobei der Schwenkteil (612) weiterhin einen äußeren Umfang (617) aufweist, der mit einer Kerbe (613) versehen ist, die in räumlicher Verbindung mit dem durchgehenden Loch (614) steht, um beim Zusammenbau des Übertragungskabels (62) mit dem Radständer (61) eine Bewegung des Übertragungskabels (62) in das durchgehende Loch (614) durch die Kerbe (613) hindurch zu ermöglichen.

3. Park-Bremsvorrichtung (3) nach Anspruch 2, **dadurch gekennzeichnet, dass** der Schwenkteil (612) des Radständers (61) weiterhin eine äußere Umfangsoberfläche (618) aufweist, die in der Nähe der Kerbe (613) mit einer Kabel-Führungsrille (615) ausgebildet ist, um es so einem Teil des Übertragungskabels (62) zu ermöglichen, sich in der Kabel-Führungsrille (615) zu erstrecken.

4. Park-Bremsvorrichtung (3) nach einem der Ansprüche 1 bis 3, **dadurch gekennzeichnet, dass** die Ständereinheit (6) weiterhin eine Schutzhülle (63) aufweist, die bezüglich eines Motorrad-Rahmens des Motorrades unbeweglich ist, und dass das Übertragungskabel (62) in dieser Schutzhülle (63) beweglich untergebracht ist.

5. Park-Bremsvorrichtung (3) nach einem der Ansprüche 1 bis 4, **dadurch gekennzeichnet, dass** die Betätigungseinheit (4) weiterhin einen Bremsflüssigkeitstank (44) aufweist, der in Strömungsverbindung mit der Hydraulik-Pumpe (41) steht, wobei der Bremsflüssigkeitstank (44) so aufgebaut ist, dass er die Bremsflüssigkeit aufnimmt und die Hydraulik-Pumpe (41) mit der Bremsflüssigkeit versorgt.

6. Park-Bremsvorrichtung (3) nach einem der Ansprüche 1 bis 5, **dadurch gekennzeichnet, dass** der Steuerknüppel (43) der Betätigungseinheit (4) ein Hebel ist, der so aufgebaut ist, dass er von Hand betätigt werden kann.

7. Park-Bremsvorrichtung (3) nach einem der Ansprüche 1 bis 5, **dadurch gekennzeichnet, dass** der Steuerknüppel (43) der Betätigungseinheit (4) ein Pedal ist, das so aufgebaut ist, dass es mit dem Fuß betätigt werden kann.

## Revendications

1. Dispositif de frein de stationnement (3) pour motocycle, ledit dispositif de frein de stationnement (3) comprenant :
une unité de fonctionnement (4) comprenant une pompe hydraulique (41) contenant du liquide de frein, une tige de piston (42) s'étendant dans ladite pompe hydraulique (41) et étant mobile entre une position libre et une position de freinage où ladite tige de piston (42) est configurée pour pressuriser le liquide de frein dans ladite pompe hydraulique (41), et un manche de commande (43) utilisable pour entraîner le mouvement de ladite tige de piston (42) de la position libre à la position de freinage ;
une unité de béquille (6) comprenant une béquille pivotante (61) ayant un corps de béquille (611) utilisable pour pivoter entre une position de repos et une position de stationnement ; et
une unité de frein de disque (5) entraînée par ladite unité de fonctionnement (4) ;
**caractérisé en ce que** ladite unité de béquille (6) comprend en outre un câble de transmission (62) comportant des première et seconde extrémités (621, 622) opposées respectivement attachées à ladite tige de piston (42) et à ladite béquille (61), de telle sorte que ladite tige de piston (42) se déplace de la position libre à la position de freinage lorsque ladite béquille (61) pivote de la position de repos à la position de stationnement, et ladite tige de piston (42) se déplace de la position de freinage à la position libre lorsque ladite béquille (61) pivote de la position de stationnement à la position de repos.

2. Dispositif de frein de stationnement (3) selon la revendication 1, **caractérisé en ce que** ladite béquille (61) comporte en outre une partie de pivot (612) raccordée de façon fixe audit corps de béquille (611), ladite partie de pivot (612) comportant une surface externe (616), et un trou traversant (614) formé à travers ladite surface externe (616) et permettant l'extension dudit câble de transmission (62) à travers celui-ci, ladite seconde extrémité (622) dudit câble de transmission (62) ayant une partie de positionnement (623) sollicitée pour venir en butée contre ladite surface externe (616) de ladite partie de pivot (612), de telle sorte que ladite seconde extrémité (622) dudit câble de transmission (62) est attachée à ladite béquille (61), ladite partie de pivot (612) comportant en outre une périphérie externe (617) formée avec une encoche (613) en communication spatiale avec ledit trou traversant (614) pour permettre le mouvement dudit câble de transmission (62) dans ledit trou traversant (614) par ladite encoche (613) pendant l'assemblage dudit câble de transmission (62) à ladite béquille (61).

3. Dispositif de frein de stationnement (3) selon la revendication 2, **caractérisé en ce que** ladite partie de pivot (612) de ladite béquille (61) comporte en outre une surface périphérique externe (618) formée avec une rainure de guidage de câble (615) adjacente à ladite encoche (613) de façon à permettre l'extension d'une portion dudit câble de transmission (62) dans ladite rainure de guidage de câble (615).

4. Dispositif de frein de stationnement (3) selon l'une quelconque des revendications 1 à 3, **caractérisé en ce que** ladite unité de béquille (6) comprend en outre un manchon de protection (63) qui est immobile par rapport à un cadre de motocycle du motocycle, et ledit câble de transmission (62) est logé de façon mobile dans ledit manchon de protection (63).

5. Dispositif de frein de stationnement (3) selon l'une quelconque des revendications 1 à 4, **caractérisé en ce que** ladite unité de fonctionnement (4) comprend en outre un réservoir de liquide de frein (44) en communication fluidique avec ladite pompe hydraulique (41), ledit réservoir de liquide de frein (44) étant configuré pour loger le liquide de frein et pour alimenter ladite pompe hydraulique (41) en liquide de frein.

6. Dispositif de frein de stationnement (3) selon l'une quelconque des revendications 1 à 5, **caractérisé en ce que** ledit manche de commande (43) de ladite unité de fonctionnement (4) est un levier configuré pour être commandé à la main.

7. Dispositif de frein de stationnement (3) selon l'une quelconque des revendications 1 à 5, **caractérisé en ce que** ledit manche de commande (43) de ladite unité de fonctionnement (4) est une pédale configurée pour être commandée au pied.
